**Europäisches Patentamt**

**European Patent Office**

**Office européen des brevets**

(19)

(11) Veröffentlichungsnummer : **0 358 852 B1**

# (12) EUROPÄISCHE PATENTSCHRIFT

(45) Veröffentlichungstag der Patentschrift :
**18.03.92 Patentblatt 92/12**

(51) Int. Cl.$^5$ : **F16L 3/00, F16L 9/18,**
**F16L 39/00, H02G 3/26,**
**H02G 3/04, F15B 13/00**

(21) Anmeldenummer : **89109904.6**

(22) Anmeldetag : **01.06.89**

(54) **Vorrichtung zur Führung eines Mediums.**

(30) Priorität : **16.08.88 DE 3827749**

(43) Veröffentlichungstag der Anmeldung :
**21.03.90 Patentblatt 90/12**

(45) Bekanntmachung des Hinweises auf die
Patenterteilung :
**18.03.92 Patentblatt 92/12**

(84) Benannte Vertragsstaaten :
**CH DE ES FR IT LI NL SE**

(56) Entgegenhaltungen :
**FR-A- 2 439 354**
**US-A- 3 805 847**
**US-A- 4 498 693**

(73) Patentinhaber : **Festo KG**
**Ruiter Strasse 82**
**W-7300 Esslingen 1 (DE)**

(72) Erfinder : **Stoll, Kurt, Dipl.-Ing.**
**Lenzhalde 72**
**W-7300 Esslingen (DE)**

(74) Vertreter : **Magenbauer, Rudolf, Dipl.-Ing. et al**
**Patentanwälte Dipl.-Ing. Rudolf Magenbauer**
**Dipl.-Phys. Dr. Otto Reimold Dipl.-Phys. Dr.**
**Hans Vetter Hölderlinweg 58**
**W-7300 Esslingen (DE)**

Jouve, 18, rue Saint-Denis, 75001 PARIS

## Beschreibung

Die Erfindung betrifft eine Aufspannvorrichtung mit einem insbesondere plattenförmigen Aufspannkörper zum lösbaren Festlegen von Gegenständen wie Werkstücken, gemäß dem Oberbegriffen Anspruch 1. Ähnliche Vorrichtungen mit den Merkmalen des Oberbegriffs des Anspruchs 1 werden z.B. bei Maschinen zum Aufspannen von zu bearbeitenden Werkstücken eingesetzt. Die Betätigung ist jedoch umständlich und zeitaufwendig und u.U. sogar störungsanfällig.

Aus den US-A-38 05 847 und US-A-44 98 693 sind bereits Vorrichtungen zum Führen eines gasförmigen oder flüssigen Mediums, z.B. Druckluft, von elektrischen Leitungen usw. bekannt geworden, die im Inneren Versorgungskanäle für das Medium usw. besitzen und die mit Hilfe besonderer Haltemittel an einem Träger, einer Tragwand usw. angebracht und evtl. auch noch mit anderen ähnlichen Vorrichtungen verbunden werden können. Vorrichtungen dieser Art sind z.B. für Krankenhäuser, hier z.B. in den Operations- und Notarzträumen bestimmt, sie bringen hier den Vorteil mit sich, daß ihre Druckluft, Sauerstoff oder sonstige medizinische Gase oder Flüssigkeiten führende Kanäle an beliebiger und somit den jeweils zweckmäßigsten Stellen im Raum angezapft werden können, wenn man z.B. einen Kranken ohne Zeitverlust wirksam versorgen will. Diese Anordnungen haben jedoch, wie sich schon aus dem Obigen ergibt, nur ein begrenztes Anwendungsgebiet, und dienen auch nicht demselben Zweck wie der Erfindungsgegenstand, sondern werden lediglich dazu verwendet, gasförmige oder flüssige Medien an beliebigen Stellen zum Einsatz zu bringen, wie dies z.B. in Krankenhäusern und Kliniken bei der Anwendung von medizinischen Gasen erforderlich ist. An das Befestigen von irgendwelchen Geräten oder Instrumenten hat man hier überhaupt nicht gedacht, Überlegungen in diese Richtung wären geradezu sinnlos. Die obigen Ausführungen treffen im übrigen auch auf die Anordnung nach der FR-A-24 39 354 zu.

Der Erfindung liegt demgegenüber die Aufgabe zugrunde, eine Vorrichtung der eingangs genannten Art, also eine Aufspannvorrichtung mit den Merkmalen des Oberbegriffs des Anspruchs 1 zu schaffen, die bei einfachem, wenig aufwendigem Aufbau äusserst vielseitig anwendbar ist und auch unabhängig von der Art der Spannvorrichtungen eingesetzt werden kann, derart, daß auch Werkstücke unterschiedlichster Form problemlos und schnell aufgespannt werden können, wobei auch verschiedenartige Aufspannvorrichtungen alternativ oder nebeneinander und an beliebigen Stellen des Aufspannkörpers eingesetzt werden können.

Zu dem oben genannten Zweck ist gemäß der Erfindung vorgesehen, daß die Strömungskanäle mit einer Druckmittelquelle und/oder -senke über ein Ventil verbindbar sind, daß die nutartigen Befestigungsvertiefungen zur Aufspannfläche hin offen sind, diese hierbei durchbrechend und sich linear und parallel zueinander erstreckend in Längsrichtund der Aufspannvorrichtung verlaufen und sie in einzelne Flächenabschnitte unterteilen, daß jeder nutartigen Befestigungsvertiefung ein Strömungskanal zugeornet ist, daß mindestens eine der Befestigungsvertiefungen mit dem zugeordneten Strömungskanal über eine Anschlußöffnung verbunden ist und daß von den in Befestigungsvertiefungen längsverschiebbar festlegbaren Aufspanneinrichtungen mindestens eine als fluidbetätigte Aufspanneinrichtung ausgebildet ist, die zu ihrer Versorgung mit dem zu ihrer Betätigung erforderlichen Druckmedium mit einem der zu den Befestigungsvertiefungen parallelen Strömungskanäle lösbar verbindbar ist.

Das obengenannte Ziel wird also gemäß der Erfindung dadurch erreicht, daß die nutartigen Befestigungsvertiefungen aus im Querschnitt etwa T-förmigen Längsnuten bestehen, die zur Aufspannfläche hin offen sind, jeder nutartigen Befestigungsvertiefung ein Strömungskanal zugeordnet ist, der an der Befestigungsvertiefung angrenzt, mindestens ein Verbindungskanal die Befestigungsvertiefungen mit dem benachbarten Strömungskanal verbindet und mindestens ein Ventil zwischen der Druckmittelquelle und den angrenzenden Strömungskanälen anordenbar ist. Nunmehr lassen sich verschiedenartige Aufspanneinrichtungen alternativ oder nebeneinander am Aufspannkörper und an beliebigen Stellen desselben anbringen, so daß auch Werkstücke unterschiedlichster Formen problemlos und schnell aufgespannt werden können. Besonders vorteilhaft ist die Möglichkeit der Verwendung von Pneumatik-Aufspanneinrichtungen, die beim Festlegen eines Werkstücks keinerlei Beschädigungen verursachen können und die sich einfach an der gewünschten Stelle in den Befestigungsvertiefungen anordnen lassen. Wegen der vorhandenen Strömungskanäle erübrigen sich dabei aufwendige und störende Verschlauchungen zur Zu- und Abfuhr des erforderlichen Druckmediums; der gefürchtete sogenannte "Schlauchsalat" tritt nunmehr nicht mehr auf. Bei alledem ist der Aufspannkörper kostengünstig herstellbar und die Kanäle lassen sich z.B. im Rahmen von Bohrungen nachträglich oder vorteilhaft im Rahmen eines Gießverfahrens unmittelbar einbringen. Schließlich ist auch die Montage einfach. Die Verwendung von Magnet-Aufspanneinrichtungen kann auch vorteilhaft sein, da diese ein berührungsloses Aufspannen von Werkstücken gestatten und auch bei unregelmäßiger Werkstückoberfläche gute Halteeigenschaften aufweisen. Es sind nunmehr auch Klebe-Aufspanneinrichtungen in Zusammenhang mit dem Aufspannkörper verwendbar, die vorzugsweise in Gestalt von Klebefolien vorliegen und auf den Flächenabschnitten zwischen den Befestigungsvertiefungen auf der Aufspannfläche festgeklebt werden. Da die Aufspanneinrichtungen in Längsrichtung der Befestigungsvertiefungen verschiebbar sind, ist es auf einfache Weise möglich, die Aufspanneinrichtungen am gewünschten Ort zu plazieren. Durch die Anwendung von Pneumatik beim Spannen erhält man bei kostengünstiger Herstellung ein zuverlässiges Spannergebnis. Durch das Absaugen entsteht im Saugkörper ein Vakuum, wodurch das jeweilige Werkstück satt gegen die Aufspannfläche gezogen wird. Der Saugkörper kann beispielsweise aus Profilgummi hergestellt sein. Die Herstellung und Betätigung sind einfach, Störungen können kaum auftreten.

Vorteilhafte Weiterbildungen der Erfindung sind in den Unteransprüchen aufgeführt.

Nachfolgend wird die Erfindung anhand der beiliegenden Zeichnung näher erläutert. In dieser zeigen:

Figur 1 eine erste Ausführungsform der erfindungsgemäßen Vorrichtung, in perspektivischer Darstellung,

Figur 2 einen Querschnitt durch die Vorrichtung gemäß Figur 1 entlang Schnittlinie III-III, wobei zusätzlich einige in Befestigungsvertiefungen angeordnete Befestigungsmittel angedeutet sind,

Figur 3 eine weitere Ausführungsform der erfindungsgemäßen Vorrichtung im Querschnitt analog der Schnittlinie III-III, wobei die Möglichkeit des Anzapfens von Versorgungskanälen verdeutlicht ist,

Figur 4 die Vorrichtung aus Figur 3 mit in Befestigungsvertiefungen angeordneten Befestigungsmitteln einer Aufspanneinrichtung für Werkstücke.

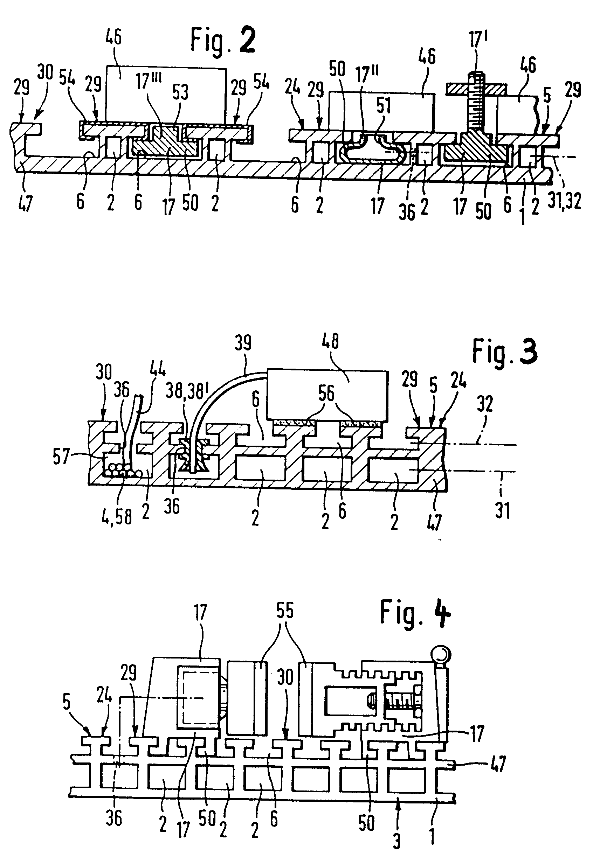

Die in den einzelnen Figuren dargestellte Vorrichtung zur Führung eines Mediums enthält mindestens einen Aufspannkörper 1. Er verfügt über mindestens einen in seinem Innern angeordneten Strömungskanal 2, der zweckmäßigerweise lineare Erstreckung aufweist, den Aufspannkörper 1 durchzieht und insbesondere an einander entgegengesetzten Körperseiten 3, 3′ ausmündet. Bevorzugte Ausführungsformen sind mit mindestens zwei Strömungskanälen 2 und vorzugsweise mehr als zwei solcher Strömungskanäle versehen. Die Anzahl läßt sich entsprechend dem Verwendungszweck des Aufspannkörpers 1 wählen. Aufspannkörper 1 mit relativ wenigen Strömungskanälen 2 besitzen vorzugsweise einen strang- oder leistenförmigen Aufbau, wenn eine größere Anzahl von Strömungskanälen 2 vorhanden ist, ist der Aufbau vorzugsweise eher plattenförmig. Die Strömungskanäle 2 eignen sich zur Führung eines Mediums. Bei diesen handelt es sich vor allem um Fluide wie gasförmige Stoffe, z.B. Druckluft, oder Flüssigkeit, z.B. ein hydraulisches Druckmedium oder Kühlmittel. In manchen Fällen können in manchen Versorgungskanälen zweckmäßigerweise entsprechende elektrische Leitungen bzw. Elektrokabel 4 verlegt werden (siehe Figur 3).

Jeder Aufspannkörper 1 verfügt am Außenumfang 5 über mindestens eine längliche, insbesondere nutförmige oder -artige Befestigungsvertiefung 6. Über diese ist er mit anderen Gegenständen bzw. Einrichtungen oder Vorrichtungen bzw. Aggregaten od.dgl. bei Bedarf fest verbindbar, z.B eine fluidbetätigte Aufspanneinrichtung für Gegenstände und/oder Einrichtungen od.dgl., wie sie in Figur 2 bzw. 4 gezeigt sind, eine Sensorhalterung, ein Kolben-Zylinder-Aggregat usw.

Bei allen abgebildeten Ausführungsbeispielen sind die vorhandenen Befestigungsvertiefungen 6 und Strömungskanäle 2 pro Aufspannkörper 1 parallel zueinander angeordnet. Die Befestigungsvertiefungen 6 sind zu den Außenseiten 3, 3′ des Aufspannkörpers hin stirnseitig offen, so daß die Aufspannkörper besonders einfach als gezogene Profilkörper hergestellt werden können, wobei Kanäle und Vertiefungen unmittelbar beim Ziehprozeß eingeformt werden. Als vorteilhaft hat sich hierbei die Verwendung von Aluminiummaterial als Körpermaterial erwiesen.

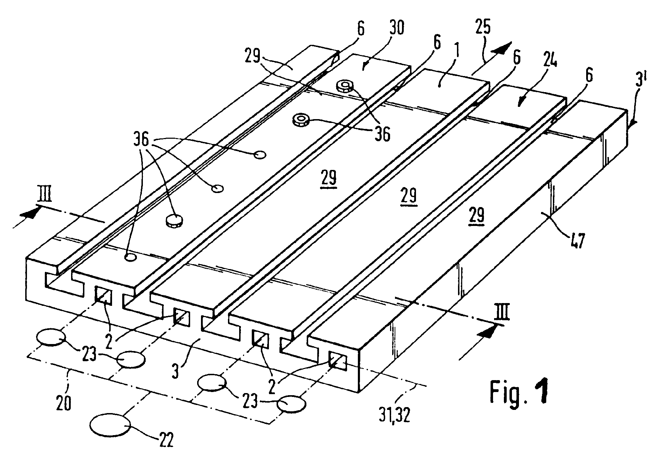

Es versteht sich, daß insbesondere die Strömungskanäle 2 bei Bedarf stirnseitig verschließbar sind, z.B. mit Hilfe von Verschlußstopfen. Es besteht auch die Möglichkeit des Anbringens von Anschlußeinrichtungen an den Kanalmündungen der Außenseite 3, 3′, um z.B. über Druckmittelschläuche bzw. -leitungen Verbindungen zu Verbrauchern und/oder ein Medium liefernde Einrichtungen 22 herbeizuführen (in Figur 1 schematisch und gestrichelt angedeutet). Die Einrichtung 22 kann eine Fluidquelle, eine Vakuum erzeugende Einrichtung, ein Fluidtank oder eine elektrische Energie liefernde Einrichtung sein. Die Aufzählung ist lediglich beispielhaft.

Alle benutzten Strömungskanäle 2 können mit einer gemeinsamen Einrichtung 22 verbunden sein, wobei in die Verbindungsleitungen bzw. -kanäle 20 zu den Versorgungskanälen 2 Steuereinrichtungen 23 z.B. in Gestalt von Ventilen eingeschaltet sein können. Es besteht aber auch die Möglichkeit, pro Aufspannkörper 1 unterschiedliche Medien in verschiedenen Strömungskanälen 2 zu führen und/oder unterschiedliche Transportrichtungen vorzusehen. Aufspannkörper 1 mit zwei Strömungskanälen 2 gestatten es daher, z.B. in der Pneumatik Zuluft und Abluft separat in einem einzigen Körper zu führen.

Es hat sich als zweckmäßig erwiesen, den jeweiligen Aufspannkörper im Querschnitt gesehen mit einer mehreckigen und hierbei, wie bei den Ausführungsbeispielen, insbesondere mit einer im wesentlichen quadratischen oder rechteckigen Außenkontur zu versehen. Dadurch ergibt sich eine quaderförmige Gestalt, die zu im wesentlichen ebenen Außenflächenbereichen der Aufspannkörper führt. Mindestens eine der vorhandenen seitlichen Außenflächen 24 eines jeweiligen Aufspannkörpers ist mit mindestens einer Befestigungsvertiefung 6 versehen. Der Begriff "seitlich" bezieht sich hierbei auf die Körperbereiche im Umfang der einzelnen Strömungskanäle 2, und der Einfachheit halber soll nachfolgend eine parallel zu den Strömungskanälen 2 verlaufende Körper-Längsrichtung bzw. -Achse 25 definiert werden.

Es sind beliebige Variationen möglich. Jede Außenfläche 24 kann mit einer oder mehreren Befestigungsvertiefungen oder auch vertiefungslos ausgebildet sein. Bei manchen Ausführungsbeispielen könne z.B. an drei in Umfangsrichtung aufeinanderfolgenden Außenflächen Befestigungsvertiefungen 6 vorgesehen sein. Bei den Ausführungsbeispielen gemäß Figur 1 bis 4 sind in einer Außenfläche mehrere mit seitlichem Abstand zueinander angeordnete und parallel zueinander verlaufende lineare Befestigungsvertiefungen 6 vorgesehen. Sie unterteilen die Außenfläche in mehrere insbesondere rechteckige Flächenabschnitte 29 einer Aufspannfläche 24 bzw. 30. Die Flächenabschnitte 29 können eben oder strukturiert sein und/oder bei Bedarf Vertiefungen aufweisen. Auch die Mehrzahl von in den Aufspannkörpern gemäß Figur 1 bis 4 vorgesehenen Strömungskanälen 2 verläuft linear, und die einzelnen Kanäle 2 sind mit seitlichem Abstand parallel zueinander angeordnet. Eine geringe Plattenbauhöhe ergibt sich, wenn die Strömungskanäle 2 zumindest im wesentlichen in einer gemeinsamen Kanalebene 31 verlaufen, die vorzugsweise parallel zu einer die mehreren Befestigungsvertiefungen 6 einer Aufspannfläche 24, 30 enthaltenden Vertiefungsebene 32 verläuft (Figur 1 bis 4). Die Ebenen 31, 32 können zusammenfallen (Figur 1 und 2). In diesem Falle ist zweckmäßigerweise zwischen zwei jeweils benachbarten Befestigungsvertiefungen 6 mindestens ein und zweckmäßigerweise nur ein einziger Strömungskanal 2 angeordnet, oder umgekehrt. Hierbei ergeben sich besonders dünne Plattenformen. Die Kanal- und Vertiefungsebenen 31, 32 können einander gegenüber auch parallel beabstandet sein (Figur 3 und 4), wobei Hinterschneidungen bzw. Überlappungen im Körpermaterial möglich sind. Bei den Ausführungsbeispielen gemäß Figur 3 und 4 verlaufen die Vertiefungen und Kanäle der beiden Ebenen quer zur Längsrichtung 25 mit Abstand zueinander bzw. übereinander, außerdem ist vorgesehen, daß einer jeweiligen Befestigungsvertiefung 6 an der ihrer längsseitigen Öffnung zur Aufspannfläche 24 entgegengesetzten Seite jeweils ein Versorgungskanal 2 im Körper-Innern gegenüberliegt. Im übrigen sind auch Kombinationen der geschilderten Kanalanordnung möglich. Es ist zweckmäßig, wenn die Kanalebene 31 und/oder Vertiefungsebenen 32 parallel zu mindestens einer Aufspannfläche 24, 30 verlaufen.

Die Strömungskanäle 2 können im allgemeinen beliebig konturiert sein, es sind Mehreck-, Oval- oder Kreisquerschnitte möglich. Vorteile können sich hierbei auf Grund verringerten Körpermaterialbedarfs, vergrößerten Kanalquerschnittes und der Nähe der Kanäle 2 zur Aufspannfläche 24 ergeben. Letzteres ist von Vorteil, wenn ein Strömungskanal 2, wie nachfolgend noch ausgeführt wird, angezapft werden soll. Die einzelnen Befestigungsvertiefungen 6 können derart gestaltet und im querschnitt insbesondere derart konturiert sein, daß sich darin Befestigungsmittel für anzubringende Gegenstände anordnen und zweckmäßigerweise verankern lassen. Als vorteilhaft haben sich T-Nuten erwiesen, deren Nutenhals in die Außenfläche 24 ausmündet.

Diese Ausgestaltungen sind in den Figuren 1 bis 4 verwirklicht. Auch Schwalbenschwanzkonturen sind vorteilhaft. Man kann auch vorsehen, daß sich an den in die Außenfläche mündenden Vertiefungshals ein Vertiefungsabschnitt mit trapezförmigem Querschnitt anschließt, dessen längere Grundseite dem schmäleren Vertiefungshals zugeordnet ist.

Die Figuren 1 bis 3 zeigen beispielhaft außerdem eine weitere vorteilhafte Ausgestaltung, bei der mindestens einer der Strömungskanäle 2 mit mindestens einer den Aufspannkörper 1 durchziehenden und quer zu diesem Strömungskanal 2 verlaufenden Anschlußöffnung 36 kommuniziert, die andererseits an der Außenseite des Aufspannkörpers 1 ausmündet (die Anschlußöffnungen 36 sind in Figur 2 und 4 nur gestrichelt angedeutet). Über eine solche Anschlußöffnung 36 kann an beliebiger Stelle des Aufspannkörpers 1 zwischen den Außenseiten 3, 3' von außen her eine Verbindung zu einem oder mehreren Strömungskanälen 2 geschaffen werden. Die Strömungskanäle 2 sind praktisch anzapfbar, und über die Verbindungskanäle 36 kann dem angezapften Strömungskanal 2 zugeordnetes Medium hindurchgeführt werden. In der Umgebung des Aufspannkörpers 1 angeordnete Vorrichtungen oder Bauelemente od.dgl. können so über kurze Versorgungswege mit dem Medium versorgt bzw. von diesem entsorgt werden. Insbesondere die Ver- und Entsorgung von über die Befestigungsvertiefungen 6 an der Vorrichtung festgelegten Einrichtungen gestaltet sich hierdurch problemlos. Einrichtungen wie ein Zylinderaggregat können über an Verbindungskanäle 36 angeschlossene Schläuche oder Leitungen 39 (vgl. Figur 3) schnell an den Strömungskanal 2 angekoppelt werden. Jedem Strömungskanal 2 können gleichzeitig mehrere Verbindungskanäle 36 zugeordnet sein (Figur 1), deren Ausmündungen hierbei vorzugsweise in Art einer Öffnungs- bzw. Lochreihe aufeinanderfolgend mit Abstand vorgesehen sind. Die Lochreihe erstreckt sich zweckmäßigerweise parallel zum angezapften Strömungskanal 2. Auf kürzestmöglichem Wege läßt sich damit ein jeweiliger Strömungskanal 2 von jeder Stelle der Aufspannfläche 24 bzw. 30 her problemlos erreichen. Es kann sich um vom Hersteller vorgefertigte Verbindungskanäle 36 handeln. Es kann aber auch vorgesehen werden, die Verbindungskanäle 36 vom Benutzer nachträglich an der gewünschten Stelle selbst einzubringen, z.B. durch Einstechen mit einem Stechwerkzeug. Zur Vermeidung von Spänen ist eine spanlose Herstellung anzuraten.

Um nicht benötigte Verbindungskanäle 36 zu verschließen, können ihnen insbesondere mediumdichte Verschlußeinrichtungen entfernbar zugeordnet sein. Um bei Bedarf ein rasches Anschließen von externen Einrichtungen zu ermöglichen, können den Verbindungskanälen 36 auch Anschlußverbindungsstücke 38, 38'

zugeordnet sein, über die das Medium weiterführende Bauelemente wie Schläuche, Leitungen 39 od.dgl. anschließbar sind. Als besonders zweckmäßig hat sich ein in Figur 3 angedeutetes Anschlußverbindungsstück 38′ erwiesen, das einen Einsteckanschluß von Schläuchen od.dgl. erlaubt und bei entnommenem Schlauch eine Rückschlagfunktion ausübt und einen Austritt von Medium aus dem Versorgungskanal 2 verhindert. Hier kann auf die DE C-3346 141 verwiesen werden, welche die nähere Ausgestaltung dieser ventilartigen Anschlußverbindungsstücke beschreibt. Die Anzapfung von Strömungskanälen 2 kann über Befestigungsvertiefungen 6 erfolgen (Figur 3), wenn der zugeordnete Verbindungskanal in einer solchen ausmündet. Auf diese Weise wird verhindert, daß Verschluß- oder Anschlußverbindungseinrichtungen über die Aufspannfläche 24 bzw. 30 vorragen. Die Mündungsstellen können sich aber auch in zusätzlich zu den Befestigungsvertiefungen 6 vorgesehenen Körpervertiefungen befinden oder an eine Aufspannfläche 24 bzw. 30 münden (Figur 2).

Wenn in einem Strömungskanal 2 Energie insbesondere in Gestalt elektrischer oder optischer Signale geführt wird und zu diesem Zwecke entsprechende Energieführungselemente 44, z.B. Kabel in einem Strömungskanal 2 verlegt sind, können auch diese Elemente über Verbindungskanäle 36 aus dem Strömungskanal herausgeführt und zum gewünschten Ort verlegt werden (dies ist in Figur 3 angedeutet). Im übrigen können die Strömungskanäle 2 durchaus auch die Funktion von Fluid-Strömungskanälen haben.

Ein jeweiliger Aufspannkörper 1 kann auch einen Haltekörper für Gegenstände wie Werkstücke 46, Maschinenteile, Aggregate 48, Zusatzteile z.B. in Gestalt von Sensoren od.dgl. bilden. In diesem Falle sind die Befestigungsvertiefungen 6 zur Aufnahme von darin insbesondere längsverschiebbar anordenbaren Befestigungsmitteln 50 für diese Gegenstände bzw. Einrichtungen vorgesehen. Die Befestigungsmittel 50 können Bestandteile der Gegenstände selbst sein - z.B. Füße eines Aggregats oder eines Zusatzteils. Es kann sich aber auch insbesondere um Bestandteile von Aufspanneinrichtungen 17 handeln.

Bei 17′ ist eine mechanische Aufspanneinrichtung angedeutet, die mit ihrem das Befestigungsmittel 50 bildenden Fußteil in einer Befestigunsvertiefung 6 verankert ist. Bei 17″ ist eine in einer Befestigungsvertiefung 6 einsitzende, fluidbetätige Aufspanneinrichtung angedeutet, die über einen Strömungskanal 2 mit Vakuum beaufschlagbar ist und durch Absaugen über eine der Aufspannfläche 30 zugewandte Öffnung 51 einen Gegenstand 46 mittels Saugkraft halten kann. Auch magnetbetätigte Aufspanneinrichtungen 17‴ lassen sich verwenden, um Gegenstände 46 magnetisch am Versorgungskörper 1 festzulegen. Hierbei kann ein in die Befestigunasvertiefung 6 eingeführtes Magnetelement 53 verwendet werden, das zur Vergrößerung der Magnethaftfläche an magnetisierbare Auflageelemente 54 koppelbar ist, die einzelne der Flächenabschnitte 29 umfassen und in die Befestigungsvertiefungen 6 eingreifen.

Die in Figur 4 abgebildete Aufspanneinrichtung 17 ist schraubstockartig aufgebaut und hat zwei Klemmbacken 55, deren eine pneumatisch bewegbar ist. Die Pneumatikenergie wird auch hier über einen angezapften Versorgungskanal 2 geliefert (strichpunktiert angedeutet).

Es können auch Haft- oder Klebe-Aufspanneinrichtungen 56 verwendet werden, wovon eine bei 56 in Gestalt von auf die Flächenabschnitte 29 aufgebrachten Haft- bzw. Klebefolien angedeutet ist. Man erkennt, wie das an dieser Aufspanneinrichtung gehaltene Aggregat 48 über eine Druckmittelleitung 39 und ein Anschlußverbindungsstück 38′ an einen Versorgungskanal 2 angeschlossen ist.

Ein jeweiliger Aufspannkörper 1 kann mindestens einen Aufnahmeraum 57 für Verlegeelemente 58 z.B. in Gestalt von Elektrokabeln oder optischen Leitern aufweisen, der von einem Strömungskanal 2 gebildet sein kann (siehe Figur 3). Der Aufnahmeraum 57 kann aber auch außen am Aufspannkörper 1 angeordnet sein, z.B. unmittelbar am Außenumfang des Aufspannkörpers 1 selbst oder an einem am Aufspannkörper lösbar festlegbaren Zusatzteil. Der Aufnahmeraum hat hier zweckmäßigerweise rinnenförmige Gestalt, ist mittels eines Deckels lösbar verschließbar und erstreckt sich in Längsrichtung 25.

Im übrigen lassen sich pro Aufspannkörper auch Strömungskanäle 2 unterschiedlichster Kontur verwirklichen, um das Körpervolumen bestmöglich auszunutzen. Selbst wenn einige Strömungskanäle nicht benutzt werden, ergibt sich durch ihr Vorhandensein eine erhebliche Gewichtseinsparung.

Der Aufspannkörper kann auch von der Oberseite eines Aufspanntisches bzw. - würfels gebildet sein.

## Patentansprüche

1. Aufspannvorrichtung mit einem insbesondere plattenförmigen Aufspannkörper (1) zum lösbaren Festlegen von Gegenständen wie Werkstücken, der eine zumindest im wesentlichen ebene Aufspannfläche (24, 30), an der die Gegenstände anlegbar sind, und die Mehrzahl von nutartigen Befestigungsvertiefungen (6) aufweist, in denen Aufspannvorrichtungen für Gegenstände (7, 8, 9, 10, 46) lösbar festlegbar sind, wobei im Inneren des Aufspannkörpers (1), in der Nähe der Befestigungsvertiefungen (6) zur Führung eines Druckmediums wie Druckluft oder Vakuum geeignete Strömungskanäle (2) vorgesehen sind, dadurch gekennzeichnet, daß die Strömungskanäle mit einer Druckmittelquelle und/oder -senke über ein Ventil (23) verbindbar sind, daß die nutartigen Befestigungsvertiefungen (6) zur Aufspannfläche hin offen sind, diese hierbei durchbrechend und sich linear und parallel zueinander erstreckend in Längsrichtung (25) der Aufspannvorrichtung verlaufen und sie in einzelne Flächenabschnitte (29) unterteilen, daß jeder nutartigen Befestigungsvertiefung (6) ein Strömungskanal (2) zugeordnet ist, daß mindestens eine der Befestigungsvertiefungen (6) mit dem zugeordnet Strömungskanal (2) über eine Anschlußöffnung (36) verbunden ist und daß von den in Befestigungsvertiefungen (6) längsverschiebbar festlegbaren Aufspanneinrichtungen (57) mindestens eine als fluidbetätigte Aufspanneinrichtung 17″ ausgebildet ist, die zu ihrer Versorgung mit dem zu ihrer Betätigung erforderlichen Druckmedium mit einem der zu den Befestigungsvertiefungen (6) parallelen Strömungskanäle (2) lösbar verbindbar ist.

2. Vorrichtung nach Anspruch 1, dadurch gekennzeichnet, daß die Strömungskaräle (2) an einander entgegengesetzten Außenseiten (3, 3′) des Aufspannkörpers (1) ausmünden.

3. Vorrichtung nach Anspruch 1 oder 2, dadurch gekennzeichnet, daß im Aufspannkörper (1) eine Mehrzahl von mit seitlichem Abstand und parallel zueinander angeordneten, sich linear erstreckenden Strömungskanälen (2) vorgesehen ist, die zumindest im wesentlichen in einer gemeinsamen Kanalebene (31) verlaufen, die vorzugsweise parallel zu einer mehrere Befestigungsvertiefungen (6) enthaltenden Vertiefungsebene (32) verläuft, wobei diese Kanäle (2) und Vertiefungen (6) zumindest im wesentlichen in einer gemeinsamen Ebene (31, 32) enthalten sind oder zumindest zum Teil in einander gegenüber versetzten Ebenen (31, 32) des Aufspannkörpers (1) verlaufen.

4. Aufspannvorrichtung nach einem der Ansprüche 1 bis 3, dadurch gekennzeichnet, daß die innerhalb der jeweiligen Befestigungsvertiefung (6) angeordneten Partien der Aufspanneinrichtungen (10) eine zur Querschnittsform der Vertiefungen (6) komplementäre Außenkontur aufweisen, wobei die Querschnittsform der Vertiefungen (6) z.B. T-förmig oder schwalbenschwanzförmig ausgestaltet sein kann.

5. Aufspannvorrichtung nach einem der Ansprüche 1 bis 4, dadurch gekennzeichnet, daß im Bereich zwischen zweinutartigen Befestigungsvertiefungen (6) jeweils mindestens ein Strömungskanal (2) angeordnet ist, derart, daß in Draufsicht auf die Aufspannfläche (24, 30) gesehen quer zur Vertiefungs-Längsrichtung abwechselnd jeweils längsseits offene Befestigungsvertiefungen (6) und innenliegende Strömungskanäle (2) angeordnet sind.

6. Aufspannvorrichtung nach einem der Ansprüche 1 bis 4, dadurch gekennzeichnet, daß jeder nutartigen Befestigungsvertiefung (6) in dem der Aufspannfläche (24, 30) entgegengesetzten unteren Bereich des Aufspannkörpers (1) ein Strömungskanal (2) benachbart ist, derart, daß rechtwinkelig zur Aufspannfläche (24, 30) jeweils übereinander angeordnete Paare von Befestigungsvertiefungen (6) und Strömungskanälen (2) vorhanden sind.

7. Aufspannvorrichtung nach einem der Ansprüche 1 bis 6, dadurch gekennzeichnet, daß die mindestens eine Pneumatik-Aufspanneinrichtung (50) als Vakuum-Spanneinrichtung, ausgebildet ist und hierbei z.B. aus einem in der zugeordneten Befestigungsvertiefung (6) anordenbaren Saugkörper mit mindestens einer zur Aufspannfläche (24, 30) hin weisenden Saugöffnung (51) besteht, der mit einem der Strömungskanäle (2) verbindbar ist, so daß ein an der Aufspannfläche (24, 30) anliegender, die Saugöffnung abdeckender Gegenstand (46) infolge Unterdruckwirkung festgehalten wird.

8. Aufspannvorrichtung nach einem der Ansprüche 1 bis 7, dadurch gekennzeichnet, daß zwischen den Befestigungsvertiefungen (6) und den Strömungskanälen (2) Verbindungskanäle (36) vorgesehen sind, in die zweckmäßigerweise an den Saugkörpern angeordnete Anschluß- bzw. Einsteckstutzen lösbar dichtend einsteckbar sind.

9. Aufspannvorrichtung nach einem der Ansprüche 1 bis 6, dadurch gekennzeichnet, daß mindestens zwei zu einer schraubstockartigen Anordnung zusammensetzbare Klemm-Aufspanneinrichtungen (17) vorhanden sind, die über Befestigungspartien (50) in den Befestigungsvertiefungen (6) festlegbar sind, und die über oberhalb der Aufspannfläche (24, 30) einander zugewandt anordenbare Klemmbacken (55) verfügen, die zumindest bei einer der Aufspanneinrichtungen (10) in einer zur Aufspannfläche (24, 30) parallelen Ebene auf pneumatischem Wege stufenlos bewegbar sind und zu diesem Zweck mit einem der Strömungskanäle (2) lösbar verbindbar ist

10. Aufspannvorrichtung nach Anspruch 9, dadurch gekennzeichnet, daß die Klemmbacke (55) der einen Klemm-Aufspanneinrichtung (17) stufenweise in Klemmrichtung versetzbar und in den einzelnen Stufenstellungen festlegbar ist.

11. Aufspannvorrichtung nach einem der Ansprüche 1 bis 10, dadurch gekennzeichnet, daß der Aufspannkörper (1) im Querschnitt gesehen eine mehreckige, insbesondere im wesentlichen quadratische oder rechteckige äußere Grundkontur besitzt, wobei jeder und mindestens einer der vorhandenen seitlichen Aussenflächen des Aufspannkörpers (1) mindestens eine Befestigungsvertiefung (6) zugeordnet sein kann.

12. Aufspannvorrichtung nach einem der Ansprüche 1 bis 11, dadurch gekennzeichnet, daß mindestens einer der Strömungskanäle (2) mit mindestens einem in den Aufspannkörper (1) eingebrachten oder einzubringenden, zweckmäßigerweise quer zu diesem Strömungskanal (2) verlaufenden Anschlußöffnung (36) kommuniziert bzw. kommunizieren kann, der an der Außenseite des Aufspannkörpers (1) insbesondere im Bereich einer Befestigungsvertiefung (6) oder Körpervertiefung (40) und hierbei vorzugsweise in einer Befestigungsvertiefung (6) ausmündet und über die der jeweilige Strömungskanal (2) insbesondere zur Hindurchführung von Medium anzapfbar ist, wobei mindestens einem Strömungskanal (2) eine aus den Ausmündungen mehrerer beabstandeter Verbindungskanäle (36) bestehende Öffnungs- bzw. Lochreihe zugeordnet sein kann und wobei weiterhin mindestens einem Verbindungskanal (36) eine z.B. als Stopfen ausgebildete Verschlußeinrichtung (37) und/oder eine Anschlußverbindungseinrichtung (38, 38′) für zur Mediumführung geeignete Bauelemente wie Druckmittelschläuche oder -leitungen (39) oder Elektrokabel (44) zugeordnet ist, wobei die Anschlußverbindungseinrichtung (38, 38′) zweckmäßigerweise mit Rückschlagfunktion ausgestattet ist, derart, daß sie bei weggenommenem Bauelement den Verbindungskanal (36) verschließt.

## Claims

1. A holding fixture, in particular with a plate-shaped clamping body (1), for the removable location of objects such as workpieces, having one or more substantially flat clamping areas (24, 30) against which the above objects can be laid and a plurality of groove-like mounting recesses (6) in which holding fixtures for objects (7, 8, 9, 10, 46) can be removably located, passages (2) suitable for a pressure medium such as compressed air or vacuum being provided in the interior of the clamping body (1) near the mounting recesses (6), characterized in that the passages are connectable to a pressure and/or vacuum source by way of a valve (23), that the groove-like mounting recesses (6) are open towards the clamping area, which they breach, extending linear and parallel to one another in the longitudinal direction (25) of the holding fixture and dividing it into individual sections (29), that a passage (2) is allocated to each mounting recess (6), that one or more of the mounting recesses (6) are connected to the associated passages (2) by way of connecting ports (36), and that one or more of the holding devices (57) located for longitudinal adjustment in the mounting recesses (6) are designed as fluid operated holding devices (17″) which can be detachably connected to any of the passages (2) extending parallel to the mounting recesses (6) to be supplied with the pressure medium required for their operation.

2. A fixture according to Claim 1, characterized in that the passages (2) terminate at opposite end faces (3, 3′) of the clamping body (1).

3. A fixture according to Claim 1 or 2, characterized in that a plurality of linear passages (2) laterally spaced from and extending parallel to one another is provided in the clamping body (1), said passages extending at least substantially in a common plane (31), which is preferably parallel to a recess plane (32) containing several mounting recesses (6), the passages (2) and recesses (6) lying at least substantially in a common plane (31, 32) or at least partially in planes (31, 32) of the clamping body (1) which are offset relative to each other.

4. A fixture according to any of Claims 1 to 3, characterized in that the parts of the holding devices (10) which are located within the mounting recesses (6) have an external profile complementing the cross-section of the recesses (6), which may be T-shaped or dovetailed.

5. A fixture according to any of Claims 1 to 4, characterized in that one or more passages (2) are located between each pair of groove-like mounting recesses (6), a plan view of the clamping area (24, 30) showing, at right angles to the longitudinal direction of the recesses, longitudinal open mounting recesses (6) alternating with enclosed passages (2).

6. A fixture according to any of Claims 1 to 4, characterized in that each groove-like mounting recess (6) is associated with an adjacent passage (2) in the lower part of the clamping body (1) opposite the clamping area (24, 30), resulting in pairs of mounting recesses (6) and passages (2) superimposed upon one another at right angles to the clamping area (24, 30).

7. A fixture according to any of Claims 1 to 6, characterized in that one or more pneumatic holding devices (50) are designed as vacuum clamping devices, comprising, for instance, a vacuum body locatable in the associated mounting recess (6), having one or more suction ports (51) directed towards the clamping area (24,30) and connectable to one of the passages (2), so that an object (46) lying on the clamping area (24, 30) and covering the suction port is held by vacuum action.

8. A fixture according to any of Claims 1 to 7, characterized in that connecting passages (36) are provided between the mounting recesses (6) and the passages (2), into which connecting passages (36) connection or plug-in pieces on the vacuum bodies can expediently be removably inserted to form a seal.

9. A fixture according to any of Claims 1 to 6, characterized in that there are two or more clamping and holding devices (17) capable of forming a vice-like assembly, locatable in the mounting recesses (6) by means of mounting parts (50) and suitable for fitting with opposing clamping jaws (55) above the clamping area (24, 30), said jaws (55), on one or more of the holding devices (10), being infinitely adjustable in a plane parallel to the clamping area (24, 30) by pneumatic means, for which purpose they can be detachably connected to one of the passages (2).

10. A fixture according to Claim 9, characterized in that the clamping jaw (55) of one of the clamping and holding devices (17) is progressively adjustable in the direction of clamping and lockable in each step position.

11. A fixture according to any of Claims 1 to 10, characterized in that the clamping body (1) has, if viewed in cross-section, a polygonal, in particular substantially square or rectangular, external outline, whereby one or more mounting recesses (6) can be allocated to one, more or all of the existing external side faces of the clamping body (1).

12. A fixture according to any of Claims 1 to 11, characterized in that one or more of the passages (2) communicate or are capable of communicating with one or more connecting ports (36) incorporated or to be incorporated in the clamping body (1) and expediently extending at right angles to the passages (2) concerned, said connecting ports (36) terminating on the outside of the clamping body (1), in particular in the area of a mounting recess (6) or a body recess (40), preferably of a mounting recess (6), and providing a means for tapping the passages (2), in particular for the delivery of medium, whereby one or more passages (2) can be associated with a row of ports or openings consisting of the terminations of several adjacent connecting passages (36), and whereby further one or more of the connecting passages (36) are associated with sealing devices (37) such as plugs and/or with connecting devices (38, 38′) for components suitable for medium transport, such as pressure medium hoses or pipes (39) or power cables (44), the connecting devices (38, 38′) being expediently provided with a check function sealing the connecting passages (36) on removal of the components.

**Revendications**

1. Dispositif de serrage comportant un corps de serrage (1), notamment en forme de plaque, pour la fixation amovible d'objets tels que des pièces à usiner, qui comporte une surface de serrage (24, 30), au moins à peu près plane, contre laquelle peuvent s'appliquer les objets, et une pluralité de creux de fixation (6), en forme de rainures, dans lesquels des dispositifs de serrage pour des objets (7, 8, 9, 10, 46) peuvent être fixés de manière amovible, des conduits d'écoulement (2), convenant au transport d'un fluide sous pression tel que de l'air comprimé ou du vide, étant prévus à proximité des creux de fixation (6), à l'intérieur du corps de serrage (1), caractérisé en ce que les conduits d'écoulement peuvent être reliés, par une soupape (23), à une source de fluide sous pression et/ou à une source de dépression, en ce que les creux de fixation (6) en forme de rainures sont ouverts vers la surface de serrage, traversent celle-ci et s'étendent de façon linéaire et parallèlement entre eux, dans la direction longitudinale (25) du dispositif de serrage et la partagent en différentes parties de surface (29), en ce qu'à chaque creux de fixation (6) en forme de rainure est associé un conduit d'écoulement (2), en ce qu'au moins un des creux de fixation (6) est relié au conduit d'écoulement (2) associé par une ouverture de raccordement (36) et en ce que parmi les dispositifs de serrage (57) à fixer dans les creux de fixation (6), de manière qu'ils puissent coulisser longitudinalement, un au moins est conçu sous la forme d'un dispositif de serrage (17″) actionné par un fluide, qui, en vue de son alimentation avec le fluide sous pression nécessaire à son actionnement, peut être relié de manière amovible avec l'un des conduits d'écoulement 2, parallèles aux creux de fixation (6).

2. Dispositif selon la revendication 1, caractérisé en ce que les conduits d'écoulement (2) débouchent sur des côtés extérieurs (3, 3′) opposés l'un à l'autre du corps de serrage (1).

3. Dispositif selon la revendication 1 ou 2, caractérisé en ce qu'il est prévu, dans le corps de serrage (1), une pluralité de conduits d'écoulement (2) s'étendant linéairement, disposés espacés et parallèles les uns aux autres, qui s'étendent au moins à peu près dans un plan de conduits (31) commun, qui est de préférence parallèle à un plan de creux (32) contenant plusieurs creux de fixation (6), ces conduits (2) et creux (6) étant contenus au moins pour la plupart dans un plan commun (31, 32) ou s'étendant au moins en partie dans des plans (31, 32) décalés les uns par rapport aux autres du corps de serrage (1).

4. Dispositif de serrage selon l'une des revendications 1 à 3, caractérisé en ce que les parties des dispositifs de serrage (10) placées à l'intérieur du creux de fixation (6) respectif, présentent un contour extérieur complémentaire à la forme de la section transversale des creux (6), la forme de la section transversale des creux (6) pouvant être par exemple en T ou en queue d'aronde.

5. Dispositif de serrage selon l'une des revendications 1 à 4, caractérisé en ce que dans la région comprise entre deux creux de fixation (6) en forme de rainures, il est prévu chaque fois au moins un conduit d'écoulement (2), de telle sorte qu'en vue de dessus de la surface de serrage (24, 30), des creux de fixation (6) ouverts longitudinalement et des conduits d'écoulement (2) intérieurs alternent, transversalement à la direction longitudinale des creux.

6. Dispositif de serrage selon l'une des revendications 1 à 4, caractérisé en ce qu'un conduit d'écoulement (2) est voisin de chaque creux de fixation (6) en forme de rainure dans la région inférieure du corps de serrage (1) opposée à la surface de serrage (24, 30), de telle sorte qu'il soit prévu, perpendiculairement à la surface de serrage (24, 30), des paires superposées de creux de fixation (6) et de conduits d'écoulement (2).

7. Dispositif de serrage selon l'une des revendications 1 à 6, caractérisé en ce qu'un dispositif de serrage pneumatique (50) au moins est conçu sous la forme d'un dispositif de serrage sous vide et que dans ce cas, par exemple, il est constitué d'un corps d'aspiration, à placer dans le creux de fixation (6) correspondant, avec au moins une ouverture d'aspiration (51) dirigée vers la surface de serrage (24, 30), qui peut être relié avec l'un des conduits d'écoulement (2), de manière qu'un objet (46), s'appliquant contre la surface de serrage (24, 30), recouvrant l'ouverture d'aspiration, soit maintenu fermement en raison de la dépression.

8. Dispositif de serrage selon l'une des revendications 1 à 7, caractérisé en ce qu'il est prévu, entre les creux de fixation (6) et les conduits d'écoulement (2), des conduits de liaison (36) dans lesquels peuvent être avantageusement introduits, de manière étanche et amovible, des tubulures de raccord ou d'emboîtement, placées sur les corps d'aspiration.

9. Dispositif de serrage selon l'une des revendications 1 à 6, caractérisé en ce qu'il est prévu au moins deux dispositifs de serrage et blocage (17), à assembler à la manière d'un étau, qui peuvent être fixés par des parties de fixation (50), dans les creux de fixation (6) et qui disposent, au-dessus de la surface de serrage (24, 30), de mâchoires de serrage (55) pouvant être tournées l'une vers l'autre, qui dans au moins l'un des dispositifs de serrage (10), sont déplaçables en continu, pneumatiquement, dans un plan parallèle à la surface de serrage (24, 30) et qui à cet effet, peut être relié de manière amovible avec l'un des conduits d'écoulement (2).

10. Dispositif de serrage selon la revendication 9, caractérisé en ce,que la mâchoire de serrage (55) d'un dispositif de serrage de blocage (17), est déplaçable pas à pas dans la direction du serrage et peut être bloquée dans les différentes positions.

11. Dispositif de serrage selon l'une des revendications 1 à 10, caractérisé en ce que le corps de serrage (1), vu en coupe transversale, possède un contour de base extérieure polygonal, notamment carré ou rectangulaire, un creux de fixation (6) au moins pouvant être associé à chacune et à au moins l'une des surfaces extérieures latérales du corps de serrage (1).

12. Dispositif de serrage selon l'une des revendications 1 à 11, caractérisé en ce que l'un au moins des conduits d'écoulement (2) communique ou peut communiquer avec au moins une ouverture de raccordement (36), placée ou à ménager dans le corps de serrage (1), s'étendant avantageusement transversalement à ce conduit d'écoulement (2), laquelle ouverture débouche sur le côté extérieur du corps de serrage (1), notamment dans la région d'un creux de fixation (6) ou d'un creux de corps (40), et dans ce cas de préférence, dans un creux de fixation (6) et par laquelle il est possible de se raccorder au conduit d'écoulement (2) respectif, notamment pour faire passer le fluide, une rangée d'ouvertures ou de trous, constituée des sorties de plusieurs conduits de liaison (36), espacés, pouvant être associée à au moins un conduit d'écoulement (2) et à un conduit de liaison (36) au moins étant associé un dispositif de fermeture (37), configuré par exemple en bouchon, et/ou un dispositif d'assemblage de raccord (38, 38'), pour des composants convenant au transport du fluide, tels que des tuyaux ou des conduites pour fluides sous pression (39) ou des câbles électriques (44), le dispositif d'assemblage de raccord (38, 38') étant avantageusement pourvu d'une fonction de non-retour, de manière à fermer le conduit de liaison (36), lorsque le composant est enlevé.

Fig. 1

Fig. 2

Fig. 3

Fig. 4